# EUROPEAN PATENT SPECIFICATION

(11) **EP 3 135 452 B1**
(45) Date of publication and mention of the grant of the patent: **04.07.2018**
(21) Application number: 16189824.2
(22) Date of filing: 07.10.2011
(51) Int. Cl.: B29C 45/18, B29B 7/94, B67D 7/62

(54) **METHOD OF PRODUCING A COLORED PLASTIC ARTICLE**
VERFAHREN ZUR HERSTELLUNG EINES FARBIGEN KUNSTSTOFF-ARTIKELS
PROCÉDÉ DE FABRICATION D'UNE PIÈCE EN PLASTIQUE COLORÉE

(30) Priority: 08.10.2010 US 391549 P
(43) Date of publication of application: 01.03.2017
(62) Divisional of application: 11770657.2
(73) Proprietor: 3M Innovative Properties Company, St. Paul, MN 55133-3427 (US)
(72) Inventor: CENTOFANTE, Charles A., Saint Paul, MN Minnesota 55133-3427 (US); BOOTHMAN, Brian S., Saint Paul, MN Minnesota 55133-3427 (US)
(74) Representative: Vossius & Partner Patentanwälte Rechtsanwälte mbB

(56) References cited:
- DE-U1-202005 015 569
- JP-A- 2007 136 719
- US-A- 4 583 487
- US-A1- 2005 052 945
- US-A1- 2010 140 288
- US-B1- 6 254 363

## Description

### BACKGROUND

This specification relates to dispensing liquids.

Many processes require liquids to be dispensed. Liquids can be dispensed in many ways from manual pouring to using mechanical pouring devices. Many conventional techniques for dispensing liquids can have problems with accuracy and spilling.

Injection molding machines are used to form plastic articles of various shapes and colors. To create colored plastic articles, injection molding systems typically use pre-colored pellets or beads of plastic resin as a base material that correspond to the color of the final molded plastic article. The pre-colored plastic resin is melted and then injected into a mold in order to form the molded plastic article in the desired color.

JP 2007 136719 A relates to a manufacturing method of oil-containing resin molded article and aims at avoiding molding failure by molding a molding material containing a lubricating oil so as not to mix air with the molding material when a resin and a lubricating oil or a lubricating grease are introduced into an injection molding machine to perform melt molding.

US 2010/0140288 A1 discloses an apparatus for delivering a fluid, especially for delivering colourants or the like to a premixer stage of plastics forming equipment, for example an injection moulder of extruder is described. The apparatus includes a fluid supply means connected to a reservoir which is arranged to concertina between minimum and maximum volume conditions. The reservoir is connected via pipeline and peristaltic pump to a delivery means which is arranged to deliver the fluid to a desired location. When the fluid supply means is empty, the level of fluid in the reservoir will fall below the level of a capacitance sensor which will sense the presence of air and cause a signal to be output to alert an operator to change fluid supply means. The fluid supply means may be changed before the reservoir is empty of fluid and, accordingly, the process may be operated continuously, even during the replacement of a reservoir. US 2010/0140288 A1 also discloses a method of producing a colored plastic article comprising providing a container comprising a liquid colorant, the container comprising an integrated pump comprising an input port and an output port; coupling the container to a molding device; driving the integrated pump to add a determined dose of the liquid colorant from the output port into a neutral plastic base material to produce a colored melted plastic that can be delivered to a mold to produce a colored plastic article.

### SUMMARY

This specification describes technologies relating to dispensing liquid materials, and the invention is directed to a method of producing a colored plastic article as defined by the claims.
In general, one innovative aspect of the subject matter described in this specification may be embodied in a method of producing a colored plastic article using a device that comprises a container coupled to an integrated pump cap, the integrated pump cap including a pump coupled to an intake port to the container and an output port configured to dispense liquid colorantfrom the container when the pump is activated.
In general, another innovative aspect of the subject matter described in this specification may be embodied in a method of producing a colored plastic article using a system that comprises: a liquid container including an integrated pump cap; a motor coupled to the liquid container configured to drive a pump in the integrated pump cap to dispense a specified amount of liquid colorant; and a device coupled to the liquid container such that the liquid dispensed from the liquid container is received by the device. In general, a further innovative aspect of the subject matter described in this specification can be embodied in methods of producing a colored plastic article that comprise the actions of: receiving a command to dispense a specified amount of liquid colorant; initiating a motor coupled to a liquid container, the container including a pump in an integrated pump cap; and stopping the motor when the specified amount of liquid has been dispensed from the liquid container. The specification also includes corresponding systems, apparatus, and computer programs, configured to perform the actions of the methods, encoded on computer storage devices.

These and other embodiments may each optionally include one or more of the following features. The container may comprise one or more components. For example it may be a single component in the form of a cup that may be rigid or flexible. The container may contain a vent to equilibrate the pressure inside the container with atmospheric pressure when the vent is open. Alternatively, the container, when coupled to the pump cap, may form a closed system (i.e, a system that does not have a vent). The container may be sufficiently flexible that, when incorporated into a closed system, the container collapses as liquid is pumped from the container. The container may comprise more than one component such as an outer container that may be rigid and an inner liner that may be flexible. The outer container may contain an air hole that is remains open or an air hole that can be open and closed with, for example, a strip of tape or a valve. The inner liner may collapse as liquid is pumped from the container.

A variety of pumps may be incorporated into the integrated pump cap such as a G-rotor pump, a peristaltic pump, a syringe pump, or an elastomeric diaphragm pump.

Particular embodiments of the subject matter described in this specification can be implemented so as to realize one or more of the following advantages. An integrated pump cap allows for precise amount of liquids to be dispensed in a controlled manner. Leaking is reduced as well as limiting the risk of under pouring or over pouring liquids. A disposable container including the integrated pump cap allows for easy cleanup and reduces contamination of the dispensed liquid. The integrated pump can be formed from plastic materials to achieve a lower manufacturing cost and to allow for easy disposability but if the nature of the materials to be pumped or other circumstances warrant, the integrated pump can be formed of metal, or a combination of metal and plastic components.

Injection molding of colored plastics using liquid colorants can reduce molding costs. A neutral base material can be used for all colors so molders do not need to maintain a number of different colored base materials. Additionally, color quality can be improved by eliminating the heat history from reheating colored base plastic material that has already been melted for coloring. Also using a liquid colorant directly eliminates additional processing, for example drying pre-colored base plastic materials, thereby saving the time and cost to dry the base material.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example dispensing system.
FIG. 2 shows an example liquid container with an integrated pump cap.
FIG. 2A shows an exploded view of an example liquid container with an integrated pump cap.
FIG. 3 shows a view of an example integrated pump cap.
FIG. 4 shows a cutaway view of the example integrated pump cap.
FIG. 5 shows another cutaway view of the example integrated pump cap.
FIG. 6 shows a cross-sectional view of the example integrated pump cap.
FIG. 7 shows a flow diagram of an example process for dispensing liquids.
FIG. 8 shows a block diagram of an example injection molding system.
FIG. 9 shows a flow diagram of an example process for dispensing colorants in an injection molding system.

Like reference numbers and designations in the various drawings indicate like elements.

### DETAILED DESCRIPTION

An integrated pump cap for a container allows for precise dispensing of liquid from the container while reducing risks of spillage and contamination. A variety of liquids having a wide range of viscosities may be dispensed by the pump including adhesives, cements, colorants, coatings, detergents, epoxies, dyes, fillers (e.g., body filler), nano-materials, oils, paints (e.g., automotive paints), pastes, pigments, polymer additives (which may be organic or inorganic), sealants, stains, toners, varnishes, waxes, and the like. The liquids may be neat (including concentrates) or in the form of a dispersion, solution or suspension.

A drive motor is coupled to the integrated pump cap in order to dispense a specified amount of liquid colorant. In some implementations or embodiments, a G-rotor pump is integrated into the cap of a container in order to pump the liquids, in response to the driving motor, from the container. However, many other types of pumps may be readily integrated into the cap depending on the nature of the material to be pumped and other application-specific considerations (e.g., cost, efficiency, accuracy, size, weight, whether moving parts can be incorporated into the cap or should be isolated away from the cap, etc.) such as a peristaltic pump, a syringe pump, or an elastomeric diaphragm pump.

In some implementations, liquid colorants are dispensed into an injection molding device in order to produce colored plastic articles but other types of molding devices may be used too including blow molding, injection blow molding, extrusion molding, and rotational molding devices for example. In particular, a neutral plastic base material (e.g., pellets or beads of plastic resin) can be heated by the molding device. Advantageously, the plastic base material may possess its "natural" color (i.e., the inherent color of the plastic resin without the addition of dyes, pigments or other colorants). The plastic base material may be white, beige, grey, or other neutral color and it may be transparent, translucent or opaque. A precise amount of a liquid colorant can be dosed into the neutral plastic base material so that the melted plastic base material is colored accordingly. The amount of colorant will vary depending on the nature of the plastic base material, the colorant, the desired color, etc. but an amount of about 0.5%- 3% by weight or volume is generally useful. The colored melted plastic is then delivered by injection or extrusion into a mold cavity or an extruder head having the shape or profile of the plastic article that is to be formed which could be, for example, a bottle, a film, or many other products conventionally produced by plastic molding devices. The invention is directed to the delivery of liquid colorant to a molding device.

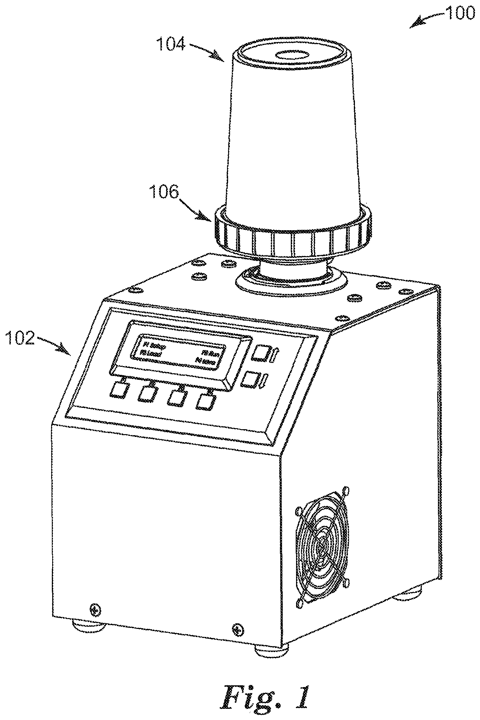

FIG. 1 shows an example of a dispensing system 100. The dispensing system includes a motor base 102 and a container 104 with an integrated pump cap 106. The motor base 102 includes a motor (not shown separately) for driving the pump contained in the integrated pump cap 106. The motor can be an AC or DC electric motor (e.g., a stepper motor, servo motor, etc.) configured to drive a driveshaft that engages the integrated pump cap 106. Alternatively, the motor can be pneumatic, hydraulic, piezo-electric, mechanical (e.g., using a rack and pinion, crankshaft, cam or other similar mechanism), or hand-driven, provided that it is configured to transfer energy to a driveshaft that engages the integrated pump cap 106. For simplicity and ease of design, it is preferred to have the motor transfer rotational energy to the driveshaft but linear energy transfer can be used too.

The motor base 102 can also include a programmable controller, either as a separate unit or as part of the motor itself, such that particular commands can be input in order to, for example, release a specified amount of liquid according to the command. The amount can be according to the weight of the liquid dispensed. For example, one command can cause the motor to operate such that one gram of liquid is dispensed. A second command can cause the motor to dispense two grams of liquid and so on. Thus, a particular liquid can be dispensed in different amounts depending on the application. For example, different liquid colorant amounts can be dispensed depending on the desired color and the amount of plastic material that is to be colored. In some other implementations, motor commands may be calibrated to dispense a liquid by volume rather than by weight (e.g. a programmed number of milliliters).

The controller can calculate motor driving time based on a specific flow rate of the pump for a given motor speed. This can depend on the particular liquid being dispensed (e.g., as a function of the viscosity of the liquid). Thus, the motor speed and flow rate can be used to calculate a motor run time to dispense a specified amount (weight or volume) of the liquid.

The motor base 102 can include an interface for entering commands, e.g., for particular liquid dispensing. For example, one or more interface controls can allow the user to specify a particular command using menus, command codes, or a combination of both (e.g., using buttons, touch screen interface, or other input).

Alternatively, in some implementations, the motor base 102 is coupled to another device that provides a control interface, for example, a computing device. The computing device can include software for both controlling the motor base 102 and providing a user interface. The user interface can allow the user to provide commands for dispensing liquids.

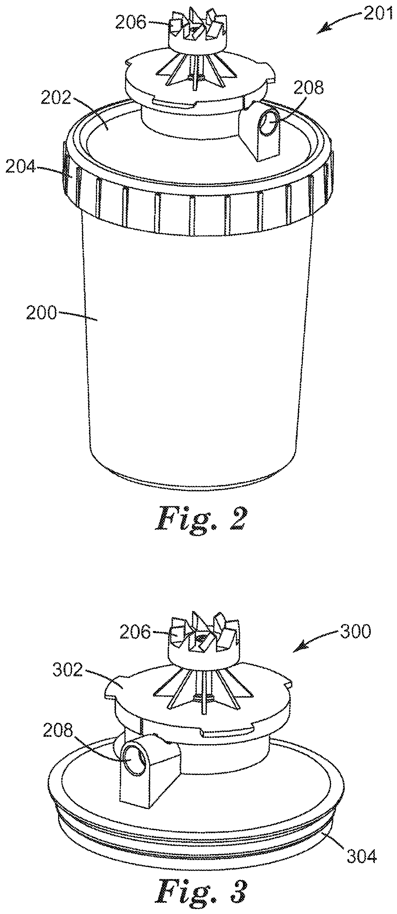

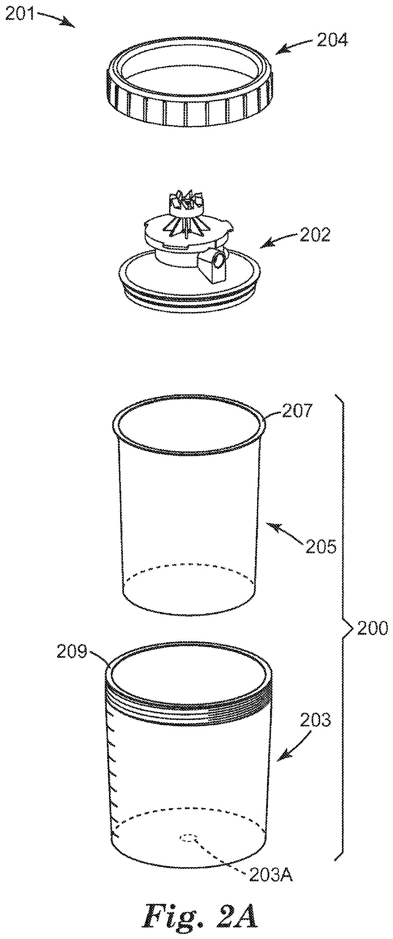

FIGS. 2 and 2A show a view 201 of an example liquid container 200 with an integrated pump cap 202. The liquid container 200 includes a rigid reusable or disposable outer container 203, and a disposable flexible liner 205 positioned within the outer container. The outer container can provide structural stability when transporting the liquid container 200. The outer container can be removably coupled to the integrated pump cap 202, for example, using a threaded ring 204. The threaded ring 204 can be integral to the cap or a separate piece. The threads on ring 204 can be either male or female with the complementary mating threads formed on the outer container. The threaded ring 204 can also be used to maintain the position of the integrated pump cap 202 on the container 200. Although threaded ring 204 is illustrated in FIG. 2 for removably coupling integrated pump cap 202 to container 200, other coupling mechanisms may be employed such as, for example, a bayonet connector, snap tabs or snap wings, and the like, which may be useful for providing a "quick connect" capability. Alternatively, integrated pump cap 202 may be coupled to container 200 by an interference or friction fit between these two components.

The integrated pump cap 202 may be coupled to the rigid outer container 203 or the flexible liner 205. The coupling mechanisms described above are particularly suited for joining the pump to the rigid outer container. Additional stability can be obtained by, for example, forming the liner with a rim 207 at its open end that rests on the upper edge 209 of the outer container 203. Securing the integrated pump cap to the outer container by the techniques mentioned above may compress the rim of the liner between the upper edge of the outer container and the pump cap.

If integrated pump cap 202 is coupled to the flexible liner this may be accomplished by a friction fit between the pump cap and the liner or by sealing pump cap 202 to the liner using, for example, sonic welding or an adhesive.

As shown in FIG. 2A, the outer container 203 may contain an air hole 203A that remains open or an air hole that can be opened and closed with, for example, a strip of tape or a valve. In this way, when the air hole 203A is open, the inner liner 203 may collapse as liquid is pumped from the container thereby facilitating dispensing all of the liquid. Thus, the flexible inner liner in combination with the pump cap provides a sealed liquid container that collapses as the liquid is dispensed. This ventless construction allows for an air tight dispensing that reduces the risk of contamination to the liquid. For example, some liquids can react with oxygen, e.g., liquids that cure when exposed to air. Other liquids can easily be contaminated by particulates in the air which can impair their function and also interfere with the dispensing. The flexible liner can be composed of various flexible materials, for example, low density polyethylene.

Although liquid container 200 is described as including an outer container and an inner liner, it may be a single component in the form of a container without a liner. The container that may be rigid or flexible and may contain a vent to equilibrate the pressure inside the container with atmospheric pressure when the vent is open. A flexible container may be composed of various flexible polymeric materials, for example, low density polyethylene or, if more strength or durability is desired, an EVA (ethylene vinyl acetate) resin such as Elvax®.

The integrated pump cap 202 includes a motor coupler 206 that, in the illustrated embodiment, rotates about a central axis in response to a corresponding rotation of a drive component in the motor base 102 shown in FIG. 1. As shown, the motor coupler 206 includes a number of teeth that can engage a corresponding set of teeth in the motor base 102. Thus, when the motor drives a rotational drive shaft coupled by the teeth to the motor coupler 206, the motor coupler 206 is rotated to drive the pump so that contents of the container 200 can be dispensed through an output port 208. The teeth can be shaped to facilitate transfer of energy from the motor to the pump. Numerous variations on this approach are possible. For example, motor base 102 and motor coupler 206 may have the same number of engagement teeth or a different number of engagement teeth, or they may interact without the use of gears that mesh such as by frictional engagement or magnetic coupling. For simplicity and ease of design, it is preferred to have the motor transfer rotational energy to the driveshaft but linear energy transfer can be used too via, for example, a rack and pinion mechanism. Advantageously, pump cap 202 may be readily disassembled from motor base 102 without using tools so as to facilitate cleaning and installation of a different container 200.

FIG. 3 shows a view of an example integrated pump cap 300 in more detail. The integrated pump cap includes a housing 302, a container coupler 304 (as part of or separate from the housing 302), output port 208, and motor coupler 206. In the embodiment of FIG. 3 and the other embodiments, the integrated pump cap and its constituent parts may be formed from plastic to achieve a lower manufacturing cost and to allow for easy disposability, but if the nature of the materials to be pumped or other circumstances warrant, the integrated pump cap may be formed of metal, or a combination of metal and plastic components.

Referring to FIG.3 as an example, pump cap housing 302 may be formed as a single piece or as a combination of pieces that are removably attached together or that are fixed together (e.g., by sonic welding). For example, a portion of the housing 302 can be a lid configured to fit container 200 (either the outer container or the liner). A portion of the lid can be removed in order to form an aperture in which to couple a pump housing including the pump for dispensing fluid from the container. In some implementations, the pump housing includes a first portion positioned on one side of the lid aperture and a second portion positioned on the other side of the lid aperture, where the two portions are configured to engage in order to lock the portions together and to the lid. An o-ring or other seal or gasket can be positioned between the lid and a portion of the pump housing to prevent liquid leaks. In some alternative implementations, the pump housing is joined to the lid (e.g., by sonic welding or using an adhesive) to bond the pump housing to the lid. In other implementations, the pump housing can be integrally formed with a lid for closing the container.

The container coupler 304 allows the integrated pump cap 300 to attach to the container 200 (FIG. 2). In some implementations (as shown in FIG. 3), the container coupler 304 is in the form of male or female threads that join with complementary threads formed on container 200. In other implementations, the container coupler 304 is configured to provide an interference or friction fit with the container. In still other embodiments, the container coupler 304 may be a bayonet connector, snap tabs, snap wings or the like (with complementary engaging structure formed on the container), which may be useful for providing a "quick connect" capability. Alternatively, the container coupler 304 may be provided as a weld (e.g., a sonic weld) or as an adhesive that joins the pump cap 300 to the container. As described above with respect to FIG. 2, the output port 208 is configured to output liquids from the container as driven by the pump in the pump cap 300. The pump is driven using the motor coupler 206.

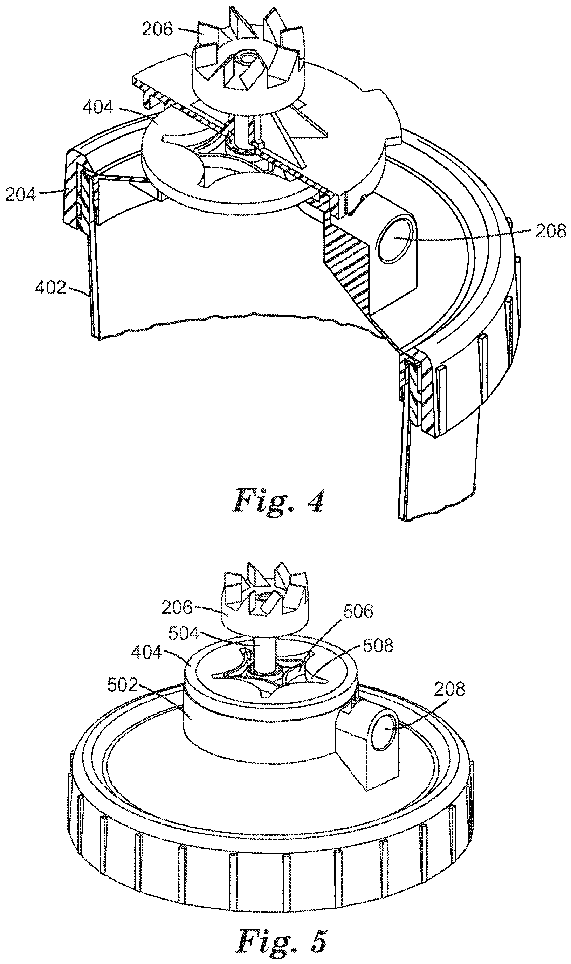

FIG. 4 shows a cutaway view 400 of the example integrated pump cap to illustrate additional details. The cutaway view 400 shows the motor coupler 206, output port 208, a container 402 coupled to the integrated pump cap using thread ring 204, and a partial view of pump 404. In the example integrated pump cap shown in FIG. 4, the pump 404 is a G-rotor pump but as noted above many other types of pumps, including a peristaltic pump, a syringe pump, or an elastomeric diaphragm pump may be used instead.

The pump can be formed from metal, plastic, other materials, or combinations thereof. For example, in some implementations, the pump housing is molded or otherwise fabricated from glass-filled nylon, and the gears are molded or otherwise fabricated from a polytetrafluoroethylne (e.g., Teflon™)-impregnated acetal. As the motor coupler 206 rotates or otherwise moves, the motion is transferred to the pump so that precise amounts of liquid from the container 402 are dispensed through output port 208. According to the invention, the integrated pump cap is mounted to the motor such that the motor coupler 206 is coupled to the motor at a downward orientation; that is, in its use position, the motor coupler is above the motor, as shown in FIG 1. Thus, the container is positioned above the pump 404 such that the liquid is gravitationally directed to an input of the pump 404.

The exemplary G-rotor pump is described in greater detail with respect to FIG. 5. FIG. 5 shows another cutaway view 500 of the integrated pump cap. In this cutaway view 500, the G-rotor pump 404 is exposed from the top while other portions of a housing 502 arc intact. In particular, as shown in FIG. 5, the motor coupler 206 is coupled to a shaft 504. The shaft 504 is further coupled to an inner or first rotor 506. The inner rotor 506 sits off center within and engages an outer or second rotor 508.

In the embodiment of FIG. 5, as the motor coupler 206 is turned by the motor, the shaft 504 rotates. Rotation of the shaft 504 causes the inner rotor 506 to rotate within the outer rotor 508. The outer rotor 508 has more slots than the number of rotor lobes on the inner rotor 506 such that the inner rotor 506 rotates in an eccentric manner with the outer rotor 508. This rotation is such that in a first position an input port is exposed allowing fluid to flow from the container into a space between the lobes of the inner rotor 506. As the inner rotor 506 and outer rotor 508 continue to rotate, an output is exposed between the lobes and the liquid is pushed out of the pump through output port 208. The outer rotor 508 revolves at a slower rate than the inner rotor 506, thereby rotating and changing the volume of the chambers created by the slots.

In some implementations which do not fall under the scope of the present invention, the pump is reversible allowing liquids to be pumped from outside the container through the output port 208 (which in this configuration may be regarded as an input port) and into a container. In some other implementations, the pump is non-reversible such that liquids can only be pumped out of the container.

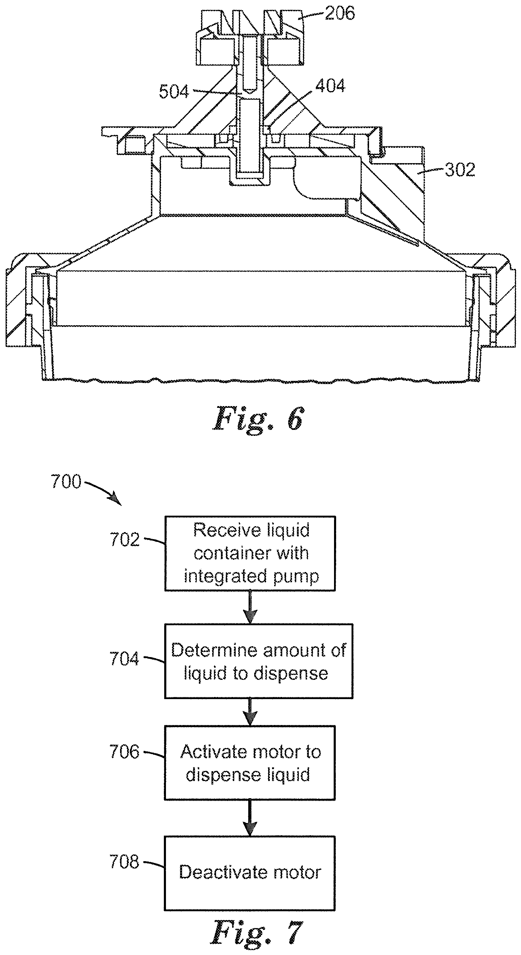

FIG. 6 shows a cross-sectional view 600 of the exemplary integrated pump cap in more detail. The cross-sectional view 600 illustrates the motor coupler 206, shaft 504, G-rotor pump 404, and housing 302. The G-rotor pump 404 is disk shaped from the side and is intersected by the shaft 504 off-center. In particular, the outer rotor 508 (FIG. 5) is intersected off-center while the inner rotor 506 (FIG. 5) is intersected by the shaft 504 substantially in the center. This off-center drive shaft 504 allows for the eccentric rotation of the G-rotor pump components.

FIG. 7 shows a flow diagram of an example process 700 for dispensing liquids. For convenience, the process 700 will be described with respect to a dispensing system that performs the process 700.

The dispensing system receives a selected liquid container with an integrated pump (702). For example, the dispensing system can be used to dispense a number of different liquids including any of those mentioned hereinabove. As such, the liquids and their respective containers can be interchanged. For example, for liquid colorants, different colors can be used with the dispensing system in order to provide different colors.

Receiving a selected liquid container can include coupling the liquid container with the integrated pump to a motor. The motor can include a drive shaft coupler configured to receive a motor coupler of the integrated pump. Additional couplings can also be performed. For example, an output port of the integrated pump can be coupled to a destination (e.g., a container, machine, or other location), for example, with a tube or other liquid pathway.

The dispensing system determines an amount of liquid to dispense (704). The amount to dispense can be determined, for example, in response to a user input to an interface of the dispensing system. In particular, the user can input a specific time to dispense, amount to dispense, or a command code that corresponds to a specific programmed amount to dispense. The input command code can be specific to the liquid to be dispensed. Alternatively, or additionally, the input command code can be specific to the application of the dispensed liquid (e.g., an amount necessary to color a particular volume of neutral colored plastic in an injection molding apparatus).

The dispensing system activates a motor to dispense liquid (706). In particular, the motor is activated in order to drive the integrated pump. The motor rotates or otherwise moves a drive shaft that causes a corresponding rotation or other movement of the integrated pump components such that precise amounts of fluid are dispensed as a function of the motor speed, pump configuration, and liquid being dispensed.

The dispensing system deactivates the motor to finish dispensing liquid (708). When the specified amount of liquid has been dispensed, the motor is deactivated to stop the integrated pump. Alternatively, the dispensing system can be calibrated to account for any residual liquid between the pump output and the destination (e.g., in a dispensing tube) that will be released so that substantially the exact amount of liquid is dispensed once the motor is deactivated. The dispensed liquid can then be used for various applications.

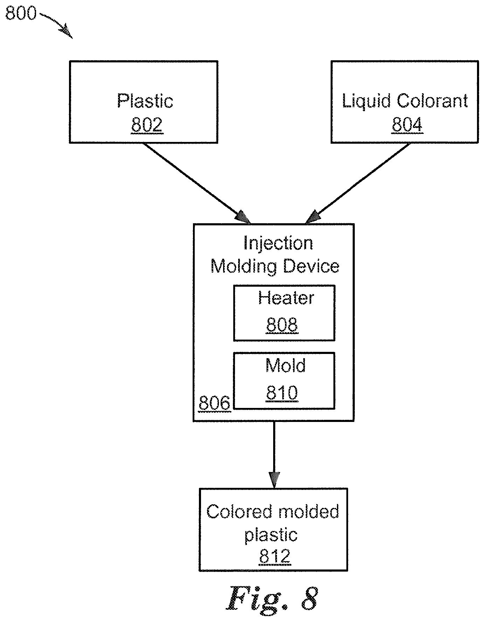

FIG. 8 shows a block diagram of an example injection molding system 800. The injection molding system 800 includes base plastic material 802 (e.g., beads or pellets of a resin in a hopper) and liquid colorant 804 or other liquid (e.g., in a container including an integrated pump for dispensing precise amounts of liquid as described above).

The plastic material 802 and liquid colorant 804 arc provided to an injection molding device 806. The injection molding device 806 includes a heater 808 and a mold 810. The heater 808 melts the plastic material 802 and into which the liquid colorant 804 can be added. The melted plastic material 802 can be injected into the mold 810. The mold has a shape formed within the mold cavity corresponding to a desired output colored molded plastic 812. Other molding systems may be used and their operational principles can be understood from the block diagram of FIG. 8 too. For example, injection molding device 806 may be a blow molding, an injection blow molding, an extrusion molding, or a rotational molding device and mold 810 may be provided by an extrusion die or head to yield a plastic component having a desired profile.

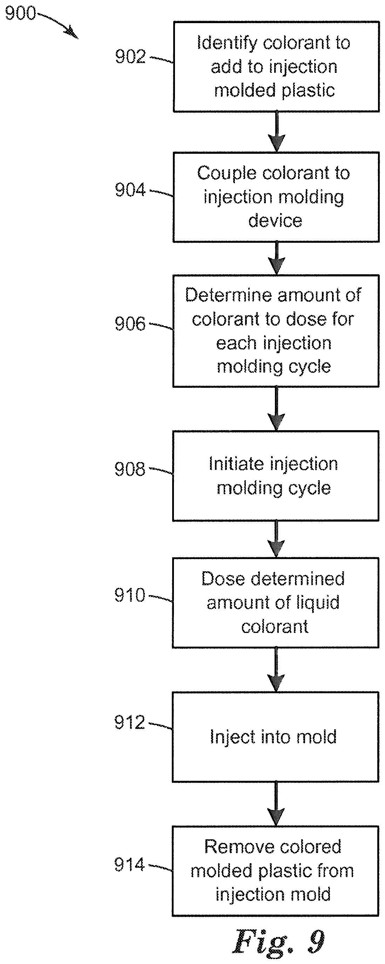

FIG. 9 shows a flow diagram of an example process 900 for dispensing colorants in an injection molding system. A colorant is identified to add to injected molded plastic in order to produce molded plastic of a particular color (902). The colorant is coupled to an injection molding device (904). For example, an output port of an integrated pump cap for a colorant container can be coupled to an input of the injection molding device.

A dosing amount of colorant for each injection molding cycle is determined (906). For example, a user can input parameters to the injection molding device or to a control interface for a motor that drives the pump of the integrated pump cap. In some implementations, commands are associated with a timing cycle for the injection molding machine such that the precise amount of colorant can be dosed for each molding cycle.

The injection molding cycle is initiated (908). Initiating an injection molding cycle can include releasing base plastic material from a hopper into a heating portion of the injection molding device to melt the base plastic material. The determined dose of liquid colorant is added to the melting or melted base plastic material (910).

Melted colored plastic is then injected into a mold cavity to form a final color molded plastic (912). The colored molded plastic is then removed from the injection mold (914).

The liquid dispenser can be used to dispense liquid colorant for use in a variety of processes including extrusion, blow molding, film production, etc. In particular, liquid colorants can be used to color various products (e.g., bottles).

The operations described in this specification, in particular, processing commands for a motor to drive a pump to dispense a specified amount of liquid, can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question; e.g., code that constitutes processor firmware, a protocol stack, a database management system, an operating system, a cross-platform runtime environment, a virtual machine, or a combination of one or more of these. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program can be deployed to be executed on one computer or on multiple computers that are located at one site or distributed across multiple sites and interconnected by a communication network.

Alternatively or in addition, the program instructions can be encoded on or can be included in a computer storage medium, a computer-readable storage device, a computer-readable storage substrate, a random or serial access memory array or device, or a combination of one or more of these. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The method of producing a colored plastic article according to the invention may include a step for dispensing a specified amount of liquid colorant comprising: receiving a command to dispense a specified amount of liquid colorant; initiating a motor coupled to a liquid container, the liquid container including a pump in an integrated pump cap; and stopping the motor when the specified amount of liquid colorant has been dispensed from the liquid container. The liquid container may comprise an outer container and an inner liner. The outer container may be rigid and the inner liner may be flexible. The rigid outer container may have an air hole and the flexible inner liner may collapse as liquid colorant is withdrawn from the liquid container. The liquid container may be pressurized and is positioned above the integrated pump cap when liquid colorant is being dispensed from the liquid container. The liquid colorant flows from the liquid container under the force of gravity during use. The liquid container is positioned above the motor when liquid colorant is being dispensed from the liquid container. The integrated pump cap may be removably coupled to the liquid container. The integrated pump cap may be removably coupled to the liquid container by a threaded ring. The threaded ring may engage corresponding threads on the liquid container. The integrated pump cap may also be removably coupled to the liquid container by a quick connector, or may be coupled to the liquid container by a weld or an adhesive. The amount of liquid that is dispensed from the liquid container may be based on the weight of the liquid or may be based on the volume of the liquid. The pump may be a G-rotor pump, a peristaltic pump, a syringe pump, or an elastic diaphragm pump. The motor may be an electric motor, a pneumatic motor, a hydraulic motor, a piezo-electric motor, or a mechanical motor. The motor may transfer rotational or linear energy to the motor coupler. The integrated pump cap may further include a first rotor that is coupled to a shaft that is coupled to the motor coupler. The integrated pump cap may further include a second rotor that moves in response to movement of the first rotor. The first rotor may include at least one lobe and the second rotor may include at least one slot, the at least one lobe on the first rotor engaging the at least one slot on the second rotor to move the second rotor in response to movement of the first rotor, and wherein the number of lobes on the first rotor is different than the number of slots on the second rotor. The shaft may intersect the first rotor substantially in the center thereof and the second rotor off-center thereof. The motor may further include a controller that can be programmed to control operation of the motor. The device may be a molding apparatus, and the molding apparatus may be an injection molding apparatus, an injection blow molding apparatus, a blow molding apparatus, or an extrusion head. The molding apparatus may further include a heater for melting plastic resin. The liquid colorant is used to color plastic resin that is received by the molding apparatus. The plastic resin has a neutral color and the amount of liquid colorant that is dispensed may be selected to impart a tailored color to the plastic resin.

While this specification contains many specific implementation details, these should not be construed as limitations on the scope of any inventions or of what may be claimed, but rather as descriptions of features specific to particular embodiments of particular inventions.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims.

## Claims

1. A method of producing a colored plastic article comprising
providing a container comprising a liquid colorant, the container comprising an integrated pump cap comprising an input port and an output port;
coupling the container to a molding device;
driving the integrated pump cap to add a determined dose of the liquid colorant from the output port into a neutral plastic base material to produce a colored melted plastic that can be delivered to a mold to produce a colored plastic article;
wherein the integrated pump cap comprises a motor coupler, wherein the method further comprises coupling the motor coupler to a motor at a downward orientation such that the motor coupler is above the motor and the liquid colorant is gravitationally directed to the input port of the integrated pump cap.

2. The method of claim 1 wherein the molding device is an injection molding device, wherein the output port on the integrated pump cap is coupled to an input of the injection molding device, the method comprising dosing the liquid colorant by coupling the output port of the integrated pump cap to the input of the injection molding device.

3. The method of any of claims 1-2 wherein the container comprises an outer container and an inner liner positioned within the outer container, the method comprising the liner collapsing as the liquid colorant is withdrawn from the container, wherein the inner liner is flexible and disposable.

4. The method of any of claims 1-2 wherein the container is a container without a liner, the container comprising a vent to equilibrate pressure inside the container with atmospheric pressure when the vent is open, the method comprising venting to equilibrate pressure inside the container with atmospheric pressure when the vent is open.

5. The method of any of claims 1-4 comprising, prior to coupling the container to the molding device, identifying the liquid colorant to be added.

6. The method of any of claims 1-5 comprising, after coupling the container to the molding device, determining an amount of the liquid colorant to dose for each molding cycle.

7. The method of any of claims 1-6 comprising, after coupling the container to the molding device, initiating a molding cycle.

8. The method of claim 6 comprising dosing the determined amount of the liquid colorant.

9. The method of any of claims 1-8 comprising removing the colored plastic article from the mold.

10. The method of claim 1 wherein driving the integrated pump cap comprises activating the motor to dispense the liquid colorant.

11. The method of claim 5 comprising allowing air to enter the outer container through an air hole as the liner is collapsing.

12. The method of any of claims 1-11 wherein the integrated pump cap comprises a pump housing that is integrally formed with a lid for closing the container, the method comprising closing the container with the lid.

13. The method of any of claims 1-12 wherein the integrated pump cap comprises a container coupler, the method comprising, attaching the integrated pump cap to the container with the container coupler.

14. The method of claim 13 wherein the container coupler is in the form of threads, wherein attaching the integrated pump cap to the container comprises joining complementary threads on the integrated pump cap and the container.

## Patentansprüche

1. Verfahren zum Herstellen eines farbigen Kunststoffartikels, umfassend
Bereitstellen eines Behälters, der einen flüssigen Farbstoff umfasst, wobei der Behälter eine integrierte Pumpkappe umfasst, die einen Einlassanschluss und einen Auslassanschluss umfasst;
Koppeln des Behälters mit einer Formvorrichtung;
Betreiben der integrierten Pumpkappe, um eine bestimmte Dosis des flüssigen Farbstoffes aus dem Auslassanschluss einem neutralen Kunststoff-Grundmaterial zuzugeben, um einen farbigen, geschmolzenen Kunststoff zu erzeugen, der einer Form zugeführt werden kann, um einen farbigen Kunststoffartikel herzustellen;
wobei die integrierte Pumpkappe einen Motorkoppler umfasst, wobei das Verfahren ferner das Koppeln des Motorkopplers mit einem Motor in einer Ausrichtung nach unten umfasst, so dass der Motorkoppler über dem Motor ist und der flüssige Farbstoff durch Schwerkraft zum Einlassanschluss der integrierten Pumpkappe geleitet wird.

2. Verfahren nach Anspruch 1, wobei die Formvorrichtung eine Spritzgießvorrichtung ist, wobei der Auslassanschluss an der integrierten Pumpkappe mit einem Einlass der Spritzgießvorrichtung gekoppelt ist, wobei das Verfahren das Dosieren des flüssigen Farbstoffes durch Koppeln des Auslassanschlusses der integrierten Pumpkappe mit dem Einlass der Spritzgießvorrichtung umfasst.

3. Verfahren nach einem der Ansprüche 1-2, wobei der Behälter einen Außenbehälter und eine Innenauskleidung umfasst, die innerhalb des Außenbehälters angeordnet ist, wobei das Verfahren ein Zusammensinken der Auskleidung umfasst, wenn der flüssige Farbstoff aus dem Behälter entnommen wird, wobei die Innenauskleidung flexibel und wegwerfbar ist.

4. Verfahren nach einem der Ansprüche 1-2, wobei der Behälter ein Behälter ohne Auskleidung ist, wobei der Behälter eine Lüftung umfasst, um Druck innerhalb des Behälters mit Atmosphärendruck auszugleichen, wenn die Lüftung offen ist, wobei das Verfahren ein Lüften zum Ausgleichen des Drucks innerhalb des Behälters mit Atmosphärendruck, wenn die Lüftung offen ist, umfasst.

5. Verfahren nach einem der Ansprüche 1-4, umfassend, vor dem Koppeln des Behälters mit der Formvorrichtung, ein Identifizieren des flüssigen Farbstoffes, der zugegeben werden soll.

6. Verfahren nach einem der Ansprüche 1-5, umfassend, nach dem Koppeln des Behälters mit der Formvorrichtung, ein Bestimmen einer Menge des flüssigen Farbstoffes, die für jeden Formzyklus dosiert werden soll.

7. Verfahren nach einem der Ansprüche 1-6, umfassend, nach dem Koppeln des Behälters mit der Formvorrichtung, ein Initiieren eines Formzyklus.

8. Verfahren nach Anspruch 6, umfassend ein Dosieren der bestimmten Menge des flüssigen Farbstoffes.

9. Verfahren nach einem der Ansprüche 1-8, umfassend ein Entnehmen des farbigen Kunststoffartikels aus der Form.

10. Verfahren nach Anspruch 1, wobei das Betreiben der integrierten Pumpkappe das Aktivieren des Motors zum Abgeben des flüssigen Farbstoffes umfasst.

11. Verfahren nach Anspruch 5, umfassend ein Einströmenlassen von Luft in den Außenbehälter durch ein Luftloch, während die Auskleidung zusammensinkt.

12. Verfahren nach einem der Ansprüche 1-11, wobei die integrierte Pumpkappe ein Pumpengehäuse umfasst, das integral mit einem Deckel zum Verschließen des Behälters gebildet ist, wobei das Verfahren das Verschließen des Behälters mit dem Deckel umfasst.

13. Verfahren nach einem der Ansprüche 1-12, wobei die integrierte Pumpkappe einen Behälterkoppler umfasst, wobei das Verfahren ein Befestigen der integrierten Pumpkappe an dem Behälter mit dem Behälterkoppler umfasst.

14. Verfahren nach Anspruch 13, wobei der Behälterkoppler in der Form von Gewinden vorliegt, wobei das Befestigen der integrierten Pumpkappe an dem Behälter ein Verbinden komplementärer Gewinde an der integrierten Pumpkappe und dem Behälter umfasst.

## Revendications

1. Procédé de production d'un article en plastique coloré comprenant
la fourniture d'un récipient comprenant un colorant liquide, le récipient comprenant une coiffe de pompe intégrée comprenant un orifice d'entrée et un orifice de sortie ;
le couplage du récipient à un dispositif de moulage ;
l'entraînement de la coiffe de pompe intégrée pour ajouter une dose déterminée du colorant liquide à partir de l'orifice de sortie dans un matériau de base de plastique neutre pour produire un plastique fondu coloré qui peut être distribué à un moule pour produire un article en plastique coloré ;
dans lequel la coiffe de pompe intégrée comprend un couplage de moteur, où le procédé comprend en outre le couplage du couplage de moteur à un moteur selon une orientation vers le bas de telle sorte que le couplage de moteur est au-dessus du moteur et que le colorant liquide est dirigé par gravité vers l'orifice d'entrée de la coiffe de pompe intégrée.

2. Procédé selon la revendication 1, dans lequel le dispositif de moulage est un dispositif de moulage par injection, dans lequel l'orifice de sortie sur la coiffe de pompe intégrée est couplé à une entrée du dispositif de moulage par injection, le procédé comprenant le dosage du colorant liquide par couplage de l'orifice de sortie de la coiffe de pompe intégrée à l'entrée du dispositif de moulage par injection.

3. Procédé selon l'une quelconque des revendications 1 à 2, dans lequel le récipient comprend un récipient externe et un revêtement interne positionné au sein du récipient externe, le procédé comprenant le revêtement s'affaissant à mesure que le colorant liquide est retiré du récipient, dans lequel le revêtement interne est souple et jetable.

4. Procédé selon l'une quelconque des revendications 1 à 2, dans lequel le récipient est un récipient dépourvu de revêtement, le récipient comprenant une mise à l'air pour équilibrer la pression à l'intérieur du récipient avec la pression atmosphérique lorsque la mise à l'air est ouverte, le procédé comprenant la mise à l'air pour équilibrer la pression à l'intérieur du récipient avec la pression atmosphérique lorsque la mise à l'air est ouverte.

5. Procédé selon l'une quelconque des revendications 1 à 4, comprenant, avant couplage du récipient au dispositif de moulage, l'identification du colorant liquide à ajouter.

6. Procédé selon l'une quelconque des revendications 1 à 5, comprenant, après couplage du récipient au dispositif de moulage, la détermination d'une quantité du colorant liquide à doser pour chaque cycle de moulage.

7. Procédé selon l'une quelconque des revendications 1 à 6, comprenant, après couplage du récipient au dispositif de moulage, le lancement d'un cycle de moulage.

8. Procédé selon la revendication 6, comprenant le dosage de la quantité déterminée du colorant liquide.

9. Procédé selon l'une quelconque des revendications 1 à 8, comprenant le retrait de l'article en plastique coloré du moule.

10. Procédé selon la revendication 1, dans lequel l'entraînement de la coiffe de pompe intégrée comprend l'activation du moteur pour distribuer le colorant liquide.

11. Procédé selon la revendication 5, comprenant le fait de laisser l'air pénétrer dans le récipient externe à travers un trou d'air à mesure que le revêtement s'affaisse.

12. Procédé selon l'une quelconque des revendications 1 à 11, dans lequel la coiffe de pompe intégrée comprend un logement de pompe qui est formé en une seule pièce avec un couvercle pour fermer le récipient, le procédé comprenant la fermeture du récipient avec le couvercle.

13. Procédé selon l'une quelconque des revendications 1 à 12, dans lequel la coiffe de pompe intégrée comprend un couplage de récipient, le procédé comprenant la fixation de la coiffe de pompe intégrée au récipient avec le couplage de récipient.

14. Procédé selon la revendication 13, dans lequel le couplage de récipient est sous la forme de filets, dans lequel la fixation de la coiffe de pompe intégrée au récipient comprend le raccordement de filets complémentaires sur la coiffe de pompe intégrée et le récipient.
